# EUROPÄISCHE PATENTSCHRIFT

(11) **EP 4 542 076 B1**
(45) Veröffentlichungstag und Bekanntmachung des Hinweises auf die Patenterteilung: **22.07.2026**
(21) Anmeldenummer: 24020318.2
(22) Anmeldetag: 15.10.2024
(51) Int. Cl.: F16D 65/00

(54) **FILTER ZUM AUFFANGEN VON BREMSSTAUB UND VORRICHTUNG MIT DIESEM FILTER**
BRAKE POWDER CAPTURING FILTER AND EQUIPMENT PROVIDED WITH SUCH A FILTER
FILTRE DE CAPTATION DE POUDRE DE FREINAGE AT EQUIPMENT MUNI D`UN TEL FILTRE

(30) Priorität: 16.10.2023 CZ 20230389
(43) Veröffentlichungstag der Anmeldung: 23.04.2025
(73) Patentinhaber: Skoda Auto a.s., 29301 Mladá Boleslav (CZ)
(72) Erfinder: Hrdlicka, Martin, CZ-29301 Mladá Boleslav (CZ); Jaros, Karel, CZ-62300 Brno (CZ)

(56) Entgegenhaltungen:
- EP-A1- 2 151 596
- WO-A1-2022/101040
- KR-B1- 102 261 576
- US-A1- 2018 031 059
- US-A1- 2020 271 176
- US-A1- 2020 355 230
- US-A1- 2023 035 373
- US-B2- 11 655 865
- US-B2- 8 025 132

## Beschreibung

### Technisches Sachgebiet

Die Erfindung betrifft das Gebiet des Auffangens schädlicher Staubpartikel, die beim gegenseitigen Reiben zweier Materialien entstehen, wobei sie sich insbesondere auf eine Vorrichtung zum Auffangen schädlicher Staubpartikel, die bei der Verwendung mechanischer Bremsen entstehen, mit Hilfe eines magnetischen Filters und auf so einen magnetischen Filter konzentriert.

### Stand der Technik

Das Bremssystem ist ein wesentlicher Bestandteil eines jeden Fahrzeugs, insbesondere eines motorgetriebenen Fahrzeugs. Die Bremswirkung wird im Wesentlichen durch den Reibungseffekt der Bremse an den sich drehenden Rädern erzielt. Dieser Prozess führt zu einem starken Verschleiß der untereinander sich reibenden Teile der Bremse, was wiederum zum Entstehen von Bremsstaub führt. Dieser wird durch Mikropartikel des Bremsbelags und Mikrofragmente der zweiten Reibfläche gebildet. Die Bremsbeläge sind in der Regel eine Mischung aus metallischen und nichtmetallischen Werkstoffen. Die zweite Reibfläche ist in der Regel die Funktionsfläche der Bremsscheibe oder Bremstrommel. Dieser Bremsstaub wird von der bisher üblichen Bremsenkonstruktion noch nicht aufgefangen, vermischt sich mit der Umgebungsluft und entweicht in die Umwelt. Der Bremsstaub ist sowohl hinsichtlich der Größe der Mikropartikel, die von Nanometern bis zu Hundertstel Millimetern reichen, als auch hinsichtlich ihrer Struktur äußerst hygienisch schädlich und stellt insbesondere beim Einatmen eine erhebliche Gefahr für die Atemwege der Bevölkerung dar.

Im Stand der Technik sind verschiedene Techniken und Typen von Vorrichtungen zum Auffangen von Bremsstaub bekannt, die verschiedene Filtervorrichtungen, Partikelabscheider und Sammelkammern umfassen.

Ein Beispiel für eine solche Vorrichtung findet sich in EP 3 938 675 A2, in der eine Vorrichtung zum Abscheiden und Sammeln von Partikeln und Bremsstaub beschrieben wird. Diese Vorrichtung besteht aus einem Gehäuse mit einem Einlass für den Luftstrom, der Staub und Partikel enthält, und einem Auslass für die gereinigte Luft. Das Gehäuse umfasst eine Reihe von Zyklonen, die Partikel, Staub und Wassertröpfchen aus dem Luftstrom abscheiden. Jeder Zyklon hat einen konischen Körper mit einer Schwerkraftaustrittsöffnung, die zur Auffangzone führt. In dieser Zone sammeln sich abgeschiedene Partikel und Staub an. Die Zyklone umfassen außerdem Kamine, die die Luft in eine weitere Zone des Gehäuses mit einem Filterelement ableiten. Dieses Gerät berücksichtigt jedoch nicht das Problem der magnetisierten Partikel und der einfachen Reinigung oder des Austauschs des Filterelements.

Darüber hinaus beschreibt z.B. das Dokument WO 2021 213 738 A1 einen Bremsstaubpartikelfilter für Scheibenbremsen. Das Filtergehäuse hat die Form eines Kreissegments und umschließt die Bremsscheibe zwischen den beiden Seitenwänden. Zwischen der Bremsscheibe und einer der Wände ist eine quer verlaufende Trennwand angebracht, die einen freien Querschnitt zwischen der Trennwand und der Seitenwand bildet. Diese Trennwand wirkt wie ein störendes Element, das den Luftstrom entlang der Bremsscheibe ablenkt, und erzeugt gezielte Turbulenzen, die dazu beitragen, die beim Bremsen entstehenden Bremsstaubpartikel effektiv abzuscheiden. Das Filtergehäuse kann ein Filtermedium umfassen, das in der Lage ist, Bremsstaubpartikel zurückzuhalten. Zur Verbesserung der Filtration können mehrere Quertrennwände eingesetzt werden. Diese Vorrichtung ist jedoch nur für Scheibenbremsen vorgesehen und beschäftigt sich nicht mit magnetisierbaren Partikeln.

Der magnetische Filter ist zum Beispiel in EP 670 172 B1 beschrieben. Dieser Filter ist jedoch nicht für Bremsstaub geeignet und seine Filterkapazität muss beim Filtern von magnetischen Partikeln für Anwendungen im Automobilbereich möglicherweise nicht ausreichend sein.

Ferner offenbart die Druckschrift KR 102 261 576 B1 eine Bremsvorrichtung für ein Fahrzeug zum Auffangen von beim Bremsen entstehendem schädlichem Staub.

Daher wäre es ratsam, eine Lösung für das Auffangen von Bremsstaub zu finden, die eine wirksame Filterung auch magnetisierbarer Partikel ermöglicht und eine langfristig hohe Filterleistung und vorzugsweise einen einfachen Austausch des Filters nach dessen Verstopfung erlaubt.

### Zusammenfassung der Erfindung

Die Mängel der im Stand der Technik bekannten Lösungen werden bis zu einem gewissen Grad durch einen Filter zum Auffangen von Bremsstaub beseitigt, der mindestens eine Schicht aus Filtermaterial und eine Vielzahl von magnetischen Elementen umfasst. Die magnetischen Elemente sind entlang dieser mindestens einen Schicht aus Filtermaterial angeordnet. Sie können direkt an einer Schicht oder einem anderen Trägerelement des Filters befestigt werden. Somit hat die Schicht eine Breite, Länge und Dicke, die in der gleichen Richtung wie auf dem Filter selbst gemessen werden. Die Länge ist also die längste Abmessung, die Breite ist senkrecht dazu, und die Dicke verläuft in der Richtung, in der die Luft durch den Filter strömt. Die durch den Filter strömende Luft umströmt dann ebenfalls diese magnetischen Elemente. Die magnetischen Elemente sind über den größten Teil der Länge und Breite des Filters verteilt. Vorzugsweise betragen sie mindestens 80 % der Länge und mindestens 50 % der Breite. Auf dem Filter sind zwischen den magnetischen Elementen nichtmagnetische Filterfenster von mindestens 4 mm Breite und 4 mm Länge vorgesehen. Vorzugsweise haben die Maschen eine Breite von mindestens 6 mm und eine Länge von mindestens 6 mm.

Die Breite der magnetischen Elemente und die Länge der magnetischen Elemente, d. h. die entlang der Breite und Länge des Filters gemessenen Abmessungen, betragen vorzugsweise mindestens 1 mm mal 1 mm. Vorzugsweise beträgt die Breite mindestens 2 mm und die Länge mindestens 2 mm.

So können z. B. bei einer regelmäßigen Anordnung von magnetischen Elementen in Längs- und Querrichtung des Filters Lücken von mindestens 4 mm zwischen benachbarten Elementen vorhanden sein. Bei einer unregelmäßigen Anordnung sind die magnetischen Elemente so angeordnet, dass die Größe der Fenster zwischen ihnen, gemessen in der Richtung der Filterlänge, mindestens 4 mm und die Größe, gemessen in der Richtung der Filterbreite, ebenfalls mindestens 4 mm beträgt. Vorzugsweise gilt dies für mindestens 75 % aller Fenster zwischen manchen mindestens drei magnetischen Elementen, noch besser für mindestens 90 %. So gibt es zwar kleinere Fenster, aber sie sind weniger zahlreich und wirken sich nicht so stark auf die Filtrationsleistung aus. Vorzugsweise sind die Elemente so angeordnet, dass diese Fenster durch Vierer-Gruppen magnetischer Elemente definiert sind.

Der Vorteil dieses Filters, bei dem die magnetischen Elemente in einem gewissen Abstand zueinander angeordnet sind, beispielsweise im Vergleich zu einem aus magnetischen Fasern gewebten Filter oder zu einem Filter, bei dem die magnetischen Elemente gleichmäßig über die gesamte Oberfläche des Filters verteilt sind, besteht gerade im Vorhandensein dieser nichtmagnetischen Fenster.

An Stellen, an denen magnetische Elemente vorhanden sind, entstehen beim Filtern Ansammlungen von magnetisierbarem aufgefangenem Staub, während in den oben erwähnten Fenstern die magnetisierbare Komponente in viel geringerem Maße oder sogar überhaupt nicht aufgefangen wird. Dadurch werden die Fenster nicht so stark verstopft wie die Stellen mit magnetischen Elementen und bleiben über einen längeren Zeitraum filterwirksam. Die Verstopfung des Filters mit magnetisierbaren Partikeln ist also nicht gleichmäßig, sondern diese Partikel bilden Ansammlungen. Die Standzeit des Filters insgesamt, bzw. die Menge an Staub, die er aufnehmen kann, ohne dass seine Filterleistung unter einen akzeptablen Wert (z.B. nach Gesundheitsschutznormen) fällt, ist damit deutlich höher als im Stand der Technik. Gleichzeitig haben die gegeneinander versetzten magnetischen Elemente keinen nennenswerten Einfluss auf den Gesamtdurchsatz des Filters, so dass die Luft im Vergleich zum gleichen Filter ohne magnetische Elemente mit minimal erhöhtem Widerstand hindurchströmen kann. So ist es beispielsweise nicht erforderlich, einen leistungsstärkeren Ventilator vorzusehen, wenn der vorliegende Filter in einer bekannten Vorrichtung zum Auffangen von Bremsstaub verwendet wird.

Dank der Bildung von Ansammlungen aus magnetisierten Partikeln eignet sich der vorliegende Filter besonders gut zum Auffangen von Bremsstaub - da magnetisierbare Partikel einen wesentlichen, oft den Hauptanteil ausmachen.

Das Filtermaterial kann jedes in der Technik bekannte Material sein, vorzugsweise hitzebeständig (z. B. widerstandsfähig bis mindestens 200 °C). Bekannt sind zum Beispiel Filter aus PTFE oder Glasfasern.

Zudem weist der Filter die Form eines Filterbandes mit einer Länge auf, die mindestens 5-mal größer, vorzugsweise mindestens 10-mal größer, als die Breite ist, wobei der Filter ferner eine Spule zum Aufwickeln des Filters umfasst. Eines der Enden des Filters ist an der Spule befestigt. Für das Aufwickeln auf die Spule ist es vorteilhaft, wenn die magnetischen Elemente eine Dicke von nicht mehr als 3 mm, vorzugsweise nicht mehr als 2 mm, besonders bevorzugt nicht mehr als 1 mm haben. Die Vorteile des Filters mit einer Spule werden weiter unten für die erfindungsgemäße Vorrichtung näher beschrieben - sie bestehen aber, kurzgefasst, insbesondere darin, dass der Filter automatisch kontinuierlich aufgewickelt werden kann und somit regelmäßig ein sauberer Filter vor den Luftauslass, in dem die Filterung stattfindet, geschoben werden kann, wodurch sich die Intervalle zwischen den Serviceeinsätzen für den Filterwechsel um ein Vielfaches verlängern.

Die magnetischen Elemente sind vorzugsweise in Reihen und Spalten angeordnet, wobei der Abstand zwischen benachbarten Reihen 6 mm bis 20 mm und der Abstand zwischen benachbarten Spalten 6 mm bis 20 mm beträgt. Die Fenster können dann Vierecke mit den Seitenmaßen 6-20 mm sein, wobei diese Vierecke durch Reihen und Spalten mit magnetischen Elementen getrennt sind. Die Reihen und Spalten können vollständig magnetisch sein (Bänder oder Fasern) oder auch aus magnetischen Körnern in bestimmten Abständen bestehen.

Vorzugsweise liegen beide Abstände im Bereich von 8 mm bis 15 mm. Die Größe dieser Abstände bestimmt die Größe der nichtmagnetischen Fenster - mit kleineren Abständen kann der Filter mehr magnetisierbare Partikel auffangen, mit größeren Abständen kann seine Fähigkeit, nichtmagnetische Partikel in den Fenstern aufzufangen, verlängert werden. Die regelmäßige Anordnung der magnetischen Elemente kann die Lebensdauer des Filters verlängern und für eine gleichmäßigere Filterung durch verschiedene Teile des Filters sorgen, was insbesondere bei einem Gleitfilter, wie er im Folgenden für die erfindungsgemäße Vorrichtung beschrieben wird, von Vorteil ist.

Bei den magnetischen Elementen kann es sich um magnetische Bänder oder magnetische Fasern handeln, wobei die magnetischen Elemente, die die Reihen definieren, quer zu den magnetischen Elementen geführt werden, die die Spalten definieren. Auf dem Filter wird ein magnetisches Gitter gebildet. Die nichtmagnetischen Fenster sind dann beim Blick auf die Filteroberfläche vollständig von magnetischem Material umgeben. Darüber hinaus können magnetische Bänder/Fasern die Festigkeit des Filters erhöhen und eine größere Oberfläche für die Bildung von Ansammlungen bieten. Es ist auch möglich, magnetische Bänder/Fasern zu verwenden, die sich gegenseitig nicht kreuzen, z. B. können sie immer zwischen den Seitenkanten des Filters verlaufen oder nur in Längsrichtung.

Außerdem können die magnetischen Elemente magnetische Körner mit einer Breite von mindestens 2 mm, einer Länge von mindestens 2 mm und einer Höhe von mindestens 0,5 mm sein. Diese Korngröße ist für eine effiziente Bildung von Ansammlungen geeignet. Die Verwendung von Körnern kann die Ansammlungen von magnetisierbaren Partikeln bei minimaler Einschränkung des Filterdurchsatzes gewährleisten.

Die magnetischen Körner können Neodym-Magnete in Form eines Zylinders sein. Vorzugsweise haben diese Zylinder eine Höhe von 0,5 mm bis 3 mm, vorzugsweise bis 2 mm. Vorzugsweise haben diese Zylinder eine Höhe von 2 mm bis 6 mm, vorzugsweise von 3 mm bis 5 mm. Beispielsweise können Magnete mit einer Höhe von 1 mm und einem Durchmesser von 5 mm geeignet sein, da sie eine ausreichende Anziehungskraft haben, um wirksame Ansammlungen magnetisierbarer Partikel zu bilden, aber nicht zu groß sind, um einen platzsparenden und leichten Filter zu bilden. Es können aber auch alle anderen Magnete verwendet werden, sowohl in Bezug auf das Material als auch auf die Form und Größe.

Im Durchschnitt kann ein Filter 10-300, vorzugsweise 20-150, magnetische Körner pro Quadratdezimeter der Filterfläche tragen. Höhere Kornzahlen können zwar mehr Partikel auffangen, aber auch den Durchsatz des Filters begrenzen und sein Gewicht erhöhen oder seinen Platzbedarf beeinträchtigen, insbesondere beim Aufwickeln auf eine Spule, wie weiter unten beschrieben wird. Die Werte aus diesem Intervall stellen für die meisten Anwendungen einen geeigneten Kompromiss zwischen diesen Parametern dar.

Vorzugsweise umfasst der Filter ferner einen Träger, an dem das Filtermaterial befestigt ist, wobei die magnetischen Elemente an dem Träger befestigt sind. Es ist aber auch möglich, die magnetischen Elemente mit Hilfe eines Trägers direkt auf der Schicht des Filtermaterials zu befestigen. Der Träger erhöht die Festigkeit des Filters und kann die Produktion erleichtern - das Aufkleben oder Anschmelzen von magnetischen Elementen auf dem Filter lässt sich auf dem Träger leichter bewerkstelligen als auf der Textilie selbst. Vorzugsweise beeinträchtigt der Träger den Luftdurchsatz durch den Filter nicht wesentlich, z. B. kann es sich um eine Textilie oder ein Netz mit relativ großen Maschen handeln und/oder er kann die Form von Säumen an den Seiten des Filters haben. So kann beispielsweise die Dichte des Netzes/der Textilie des Trägers der Dichte der Anordnung der magnetischen Elemente entsprechen. Die Körner können zum Beispiel an den Kreuzungspunkten der Quer- und Längsfasern des Trägers angebracht werden. Wenn es sich bei den magnetischen Elementen um Fasern oder Bänder handelt, die in Querrichtung des Filters verlaufen, können sie an beiden Enden am Saum befestigt werden.

Die Mängel der aus dem Stand der Technik bekannten Lösungen werden bis zu einem gewissen Grade auch durch eine Vorrichtung zum Auffangen von Bremsstaub für Kraftfahrzeuge beseitigt, die eine Sammelkammer umfasst, wobei die Sammelkammer mindestens einen Lufteinlass und mindestens einen Luftauslass aufweist. Diese Vorrichtung umfasst ferner einen erfindungsgemäßen Filter, der mit einer Spule zum Aufwickeln wie oben beschrieben versehen ist. Dieser Filter hat also die Form eines Filterbandes und wird vor den Luftauslass gespannt. Die Sammelkammer umfasst ferner mindestens eine Vorratskammer zum Aufbewahren eines sauberen Teils des Filters, wobei eine Spule zum Aufwickeln mit einem Ende des Filters in der Sammelkammer und das andere Ende des Filters in der Vorratskammer angeordnet ist.

Vorzugsweise kann die Sammelkammer ein dünnwandiges Gussstück in Form eines Kegels mit einer aufgeweiteten Spitze sein, aus dessen Boden der Luftauslass und aus der aufgeweiteten Spitze der Lufteinlass austritt. Die Form des Kegels sorgt für eine kleinere Größe der Vorrichtung, aber gleichzeitig für eine ausreichend große Fläche für die Anordnung des Filterbandes. Die Form des dünnwandigen Gussstücks der Kammer kann an die Bedürfnisse der einzelnen Fahrzeugtypen angepasst werden. Die Sammelkammer ist der Teil der Vorrichtung zum Auffangen von Bremsstaub, in dem der Luftstrom gleichmäßig verteilt wird und die Luft mit Staubpartikeln von den Fahrzeugbremsen gefiltert wird. Jede Vorratskammer umfasst einen Vorrat an sauberem Filterband, wobei das Filterband aus jeder solchen Vorratskammer zu mindestens einem Luftauslass und zu einer Spule zum Aufwickeln austritt. Vorzugsweise umfasst das Filterband ein Netz von Fasern, die die Partikel mit einer Größe von mindestens einem Mikrometer auffangen.

Dank der Verwendung einer Spule zum Aufwickeln des verstopften Filterbandes und dank der Verwendung einer Vorratskammer, in der sich ein Vorrat an sauberem Filterband befindet, ist es möglich, den verbrauchten Filter im Verlaufe der Nutzung der Vorrichtung laufend oder gelegentlich nach einer Verschmutzung des aktuell verwendeten Teils des Bandes durch einen neuen Filter zu ersetzen. So kann z. B. eine entsprechende Länge des verschmutzten Filters aufgewickelt werden, nachdem eine vorgegebene Strecke zurückgelegt wurde, nach einer bestimmten Anzahl von Bremsbetätigungen, nach einer bestimmten Bremseinsatzzeit, nach einem bestimmten Druckanstieg vor dem Filterband, der auf eine Verstopfung hinweist, nach einem bestimmten Anstieg der Stromaufnahme beim Ventilator, der auf eine Filterverstopfung hindeuten kann, usw.

Der Filterwechsel ist somit weitgehend automatisiert, und ein manueller Wechsel ist erst nach längerer Zeit notwendig, wenn der Vorrat an sauberen Filtern aufgebraucht ist. Gleichzeitig ist es möglich, eine angemessene Filterleistung über einen längeren Zeitraum aufrechtzuerhalten, der bei herkömmlichen Bremsstaubabsauganlagen mit der Zeit abnehmen kann, wenn der Filter verstopft oder abgenutzt ist. Dank der Unterbringung des sauberen Filters in einer separaten, zweckmäßig abgetrennten Vorratskammer wird eine Verschmutzung des Filters verhindert, bevor er vor den Luftauslass gespannt wird. Der Durchlass zwischen der Vorratskammer und der Sammelkammer kann also die Form eines Spalts haben, der eventuell mit einer flexiblen Lamelle versehen ist, um den Filter anzudrücken (zu spannen) und das Eindringen von Verunreinigungen zu verhindern, wo dieser Spalt vorzugsweise der kleinstmöglichen Abmessung entspricht, die für einen leichten Durchgang des Filterbandes ausreicht.

Die vorliegende Vorrichtung kann wesentlich längere Wartungsintervalle aufweisen, nach denen ein Eingreifen des Bedieners erforderlich ist, damit die Vorrichtungen effizient arbeiten können. Damit werden die Wartungskosten gesenkt und auch die Menge an Staubpartikeln kann langfristig reduziert werden, die das Kraftfahrzeug während der Fahrt in die Luft abgibt, da die Effizienz eines stufenlos gewechselten Filters mit der Zeit nicht so stark abnimmt wie bei Standardgeräten. Gleichzeitig wird ein Filterband als Filter eingesetzt, das einen relativ einfachen Aufbau und damit niedrige Anschaffungskosten haben kann, so dass die Erhöhung der Filterstandzeit mit einem geringeren Preis im Vergleich zu modernsten Anlagen verbunden sein kann.

Die Menge des gelagerten sauberen Filters, d.h. die Größe des Vorrats in der Vorratskammer, kann z.B. den üblichen Wartungsintervallen entsprechen, d.h. der Filter sollte etwa nach der gleichen Zeitdauer wie das Öl gewechselt werden, so dass diese Wartungsarbeiten verbunden werden können. Im Allgemeinen kann es sich dabei beispielsweise um Einheiten von Metern Filterband handeln, die zu Beginn des Einsatzes in einer Vorratskammer gelagert werden.

Die Sammelkammer befindet sich vorzugsweise im Fahrgestell des Fahrzeugs nach der Montage am Fahrzeug, wobei ihr Lufteinlass vorzugsweise mit einer Luftentnahmestelle in der Nähe der Bremse verbunden ist. Diese Verbindung kann mit einem Schlauch oder einem Rohr hergestellt werden. Die Luftentnahmestelle ist die Stelle in der Nähe mindestens einer Bremse, an der die durch die Reibung der Bremsmaterialien mit Staubpartikeln verschmutzte Luft angesaugt wird und von der diese Luft in die Sammelkammer geleitet wird. Die Luftansaugung von der Entnahmestelle zum Rohr, das mit dem Lufteinlass der Kammer verbunden ist, kann durch eine Luftpumpe erfolgen. Das Ende des Rohrs an der Entnahmestelle kann, je nach Art und Form der Bremse, so geeignet geformt werden, dass die größtmögliche Menge an verschmutzter Luft aufgefangen werden kann.

Jedes Filterband ist vorzugsweise an einem Ende an einer Spule zum Aufwickeln mit einem Antrieb zum Drehen der Spule befestigt. Vorteilhafterweise ist das Filterband an beiden Enden an einer Spule befestigt, so dass das Filterband am Luftauslass permanent gespannt werden kann. Die Vorratskammer umfasst vorzugsweise einen Deckel zur Unterbringung und Entnahme des Filterbandvorrats. Eine Abwickelspule mit einem aufgewickelten Vorrat an sauberem Filterband kann in der Vorratskammer untergebracht werden, wobei nachdem das saubere Filterband aufgebraucht ist, kann die Abwickelspule aus der Vorratskammer entfernt und durch eine neue Abwickelspule mit einem aufgewickelten Vorrat an sauberem Filterband ersetzt werden.

Allgemein kann eine ausreichende Spannung des Filters vor dem Luftauslass aber auch auf andere Weise sichergestellt werden, z. B. durch Unterbringung beider Längsseiten des Filters in die Nuten zur Filterführung, durch Anpressen des Filters am Austritt aus der Vorratskammer mit einem flexiblen Element, durch Anordnen des Filters vorne und hinten zwischen einem Paar von Gittern usw.

Die Sammelkammer umfasst vorzugsweise eine Wickelkammer zur Aufnahme der Spule. Vorzugsweise befindet sich die Spule zum Aufwickeln in der Wickelkammer, wobei ein verschmutztes Filterband darauf aufgewickelt werden kann. Dank der Wickelkammer kann der verschmutzte Filter vom Hauptteil der Sammelkammer getrennt werden, so dass die Gefahr, dass der aufgefangene Staub im Laufe der Zeit wieder freigesetzt wird, verringert wird. Die Wickelkammer umfasst vorzugsweise einen Deckel zur Unterbringung einer neuen Spule zum Aufwickeln und zur Entnahme einer Spule zum Aufwickeln mit einem verschmutzten Filterband. Nachdem das verschmutzte Filterband vollständig aufgewickelt ist, kann die Spule zum Aufwickeln aus der Wickelkammer entfernt und durch eine neue Spule zum Aufwickeln ohne Filterband ersetzt werden. Die Spule zum Aufwickeln in der Wickelkammer ist vorzugsweise mit einem Schrittmechanismus verbunden, der sie in Drehung versetzt und so den schrittweisen und automatischen Austausch des verschmutzten Filterbandes am Luftauslass gegen ein sauberes Filterband ermöglicht. Insbesondere kann ein Drehschritt dann der Länge des Filterbandes entsprechen, die zu einem bestimmten Zeitpunkt der Verschmutzung ausgesetzt ist, d.h. der Länge des Luftauslasses. Während der Benutzung der Vorrichtung könnte die Drehzahl der Spule zum Aufwickeln, die einem bestimmten, angemessen langen Schritt entspricht, abnehmen, da der Durchmesser der Spule zum Aufwickeln um das bereits aufgewickelte Band zunimmt. Der Einfachheit halber kann der Schritt für den Filtervorschub jedoch einer konstanten Drehzahl der Spule zum Aufwickeln während der gesamten Nutzungsdauer des Filters entsprechen.

Die Sammelkammer umfasst vorzugsweise einen Ventilator mit einem Elektromotor zum Antrieb des Ventilators. Der Ventilator befindet sich vorzugsweise hinter dem Lufteinlass in die Sammelkammer und verstärkt den Fluss der verschmutzten Luft in die Sammelkammer. Der Elektromotor ist vorzugsweise mit der Steuereinheit des Fahrzeugs verbunden, und wenn die Bremse aktiviert wird, d. h., wenn der Hydraulikdruck im Bremssteuersystem ansteigt, kann der Elektromotor in Gang gesetzt werden, so dass sich der Ventilator dreht, wobei es zum Ansaugen der verschmutzten Luft aus den Fahrzeugbremsen in die Sammelkammer kommt.

Vorzugsweise umfasst die Sammelkammer mindestens eine Verteilungsrippe für die Luftleitung zwischen dem mindestens einen Lufteinlass und dem mindestens einen Luftauslass. Jede Verteilungsrippe befindet sich vorzugsweise hinter dem Ventilator. Die Luftverteilungsrippen sind vorzugsweise mindestens vier und sorgen für eine gleichmäßige Luftzufuhr zum Filterband. Die Verteilungsrippe kann eine längliche Platte aus dem gleichen Material wie die Sammelkammer sein und kann untrennbar mit der Sammelkammer verbunden sein. Diese Rippen können besonders vorteilhaft sein, wenn sich die Sammelkammer zumindest über einen Teil der Länge der Sammelkammer in Richtung vom Lufteinlass zum Filterband allmählich ausbreitet. Diese Ausbreitung kann z. B. nach dem Ventilator beginnen und nicht sofort nach dem Lufteinlass.

Die Vorrichtung zum Auffangen von Bremsstaub für Kraftfahrzeuge umfasst vorzugsweise mindestens einen Sekundärfilter, wobei der Sekundärfilter vorzugsweise Kanäle umfasst. Dieser Filter besteht vorzugsweise aus Keramik und fängt Staubpartikel auf, die das Filterband und ein eventuelles Magnetgitter passiert haben, wodurch die Effizienz der Vorrichtung zum Auffangen von Bremsstaub weiter erhöht wird. Der Sekundärfilter befindet sich daher zweckmäßigerweise hinter dem Filterband (in Bezug auf die Strömungsrichtung der gefilterten Luft durch die Vorrichtung), entweder zwischen dem Filterband und dem Luftauslass aus der Kammer oder erst nach dem Luftauslass und damit außerhalb der Kammer. Im Allgemeinen kann der Sekundärfilter auch vor dem Filterband platziert werden, aber da das Filterband ständig bewegt werden kann, ist es vorzuziehen, es stärker verschmutzter Luft auszusetzen, um die Lebensdauer des Sekundärfilters zu verlängern. Wenn die Kammer mehrere Luftauslässe hat, kann jeder von ihnen mit einem Sekundärfilter ausgestattet werden, der für diese Auslässe gemeinsam sein kann.

Die Mängel der aus dem Stand der Technik bekannten Lösungen werden bis zu einem gewissen Grad auch durch einen Personenkraftwagen beseitigt, der eine Karosserie mit Fahrgestell, Rädern und Bremsen zum Abbremsen der Räder umfasst. Der Personenkraftwagen umfasst ferner die oben beschriebene Vorrichtung zum Auffangen von Bremsstaub für Kraftfahrzeuge.

Die Vorrichtung zum Auffangen von Bremsstaub für Personenkraftwagen umfasst ferner eine Luftleitung, wobei die Luftleitung von der mindestens einen Bremse zum Lufteinlass der Sammelkammer führt. Die Luftleitung kann durch ein Rohr mit einer Luftpumpe realisiert werden, das die verschmutzte Luft mit Staubpartikeln von einer Entnahmestelle in der Nähe der Bremse durch den Lufteinlass in die Sammelkammer fördert. Vorzugsweise wird eine Vorrichtung zum Auffangen von Bremsstaub für alle Bremsen eines Kraftfahrzeugs verwendet, und es wird jeweils ein Schlauch für jede Luftzufuhr der Entnahmestelle der Bremse verwendet.

Es kann vier Luftzufuhren geben, eine für jede Bremse, und daher kann es vier Lufteinlässe in der Sammelkammer geben, einen für jede Luftzufuhr, bzw. können alle Luftzufuhren noch vor dem Lufteinlass zu einer Luftzufuhr zusammengefasst werden, was besonders geeignet ist, wenn es einen Ventilator in der Sammelkammer direkt nach dem Einlass gibt.

Die Vorrichtung zum Auffangen von Bremsstaub für Personenkraftwagen ist vorteilhafterweise im Fahrgestell untergebracht, und gleichzeitig befindet sich die Luftleitung in die Sammelkammer im Fahrgestell.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine schematische Seitenansicht der inneren Anordnung der Vorrichtung zum Auffangen von Bremsstaub für Kraftfahrzeuge (siebente Ausführung der Erfindung),
Fig. 2 eine schematische Draufsicht der inneren Anordnung der Vorrichtung zum Auffangen von Bremsstaub für Kraftfahrzeuge,
Fig. 3 eine schematische perspektivische Ansicht eines Teils eines erfindungsgemäßen Filters, wobei der Träger in dieser Ausführung auf beiden Seiten mit einer Schicht aus Filtermaterial bedeckt ist und sich die magnetischen Körner auf dem Träger zwischen den Schichten befinden (erste Ausführung der Erfindung),
Fig. 4 eine schematische Ansicht einer weiteren Ausführung des Filters, bei der die magnetischen Körner direkt auf der Schicht des Filtermaterials sind und in einem quadratischen Gitter angeordnet sind (zweite Ausführung der Erfindung),
Fig. 5 eine schematische Ansicht einer weiteren Ausführung des Filters, bei der sich die magnetischen Körner auf einem gitterförmigen Träger befinden, der ferner einen Saum zur Verstärkung des Filters aufweist (dritte Ausführung der Erfindung),
Fig. 6 eine schematische Ansicht einer weiteren Ausführung des Filters, bei der die magnetischen Elemente in einem quadratischen Gitter angeordnete magnetische Fasern sind (vierte Ausführung der Erfindung),
Fig. 7 eine schematische Ansicht einer alternativen Ausführung des Filters, bei der die magnetischen Elemente magnetische Fasern sind, die im Gegensatz zu der Ausführung in der Fig. 6 nicht senkrecht und parallel zueinander sind, sondern in weniger regelmäßigen Richtungen geführt werden (fünfte Ausführung der Erfindung),
Fig. 8 eine schematische Ansicht einer alternativen Ausführung des Filters, bei der die magnetischen Elemente magnetische Körner sind, die im Gegensatz zu der Ausführung in der Fig. 4 nicht in regemäßigen Reihen und Spalten zueinander angeordnet sind, sondern eher zufällig angeordnet sind (sechste Ausführung der Erfindung),

### Ausführungsbeispiele der Erfindung

Die Erfindung wird anhand von Ausführungsbeispielen unter Bezugnahme auf die entsprechenden Zeichnungen näher erläutert.

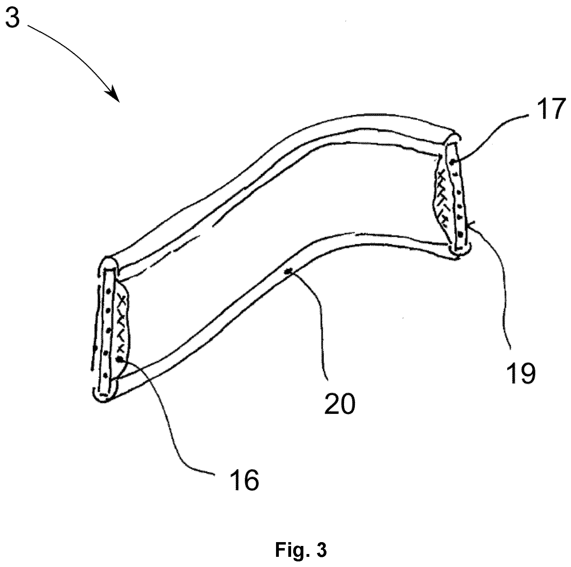

Der Gegenstand der Erfindung ist ein Filter zum Auffangen von Bremsstaub. Die erste beispielhafte Ausführung dieses Filters ist in der Fig. 3 dargestellt.

In der ersten Ausführung umfasst der Filter in Form eines Filterbandes 3 zwei Schichten 16 eines Filtermaterials - einer Filter-Nanotextilie. Zwischen diesen Schichten 16 befindet sich ein Träger 19, der aus einem flexiblen Netz besteht, das weniger dicht ist als die Filterschichten 16, es ist also nicht zum Filtern von Staub bestimmt, sondern aus stärkeren Fasern besteht, in diesem Fall aus synthetischen PTFE-Fasern mit einem größeren Durchmesser als die Filterfasern. Das Filterband 3 hat eine Breite von 12 cm und eine Länge von 250 cm. Der Träger 19 und die Filterschichten 16 haben diese Abmessung. An beiden Seitenkanten umfasst der Träger 19 ferner einen Saum 20, der ebenfalls aus PTFE-Fasern besteht und zur Erhöhung der Festigkeit des Filters, für eine bessere Spannung während der Filtration dient, wie im Folgenden noch näher beschrieben wird. Die Dicke des Saums 20 beträgt 1 mm, seine Breite 3 mm. Die Fasern, die den Träger 19 bilden, haben eine Breite von 2 mm und eine Dicke von 0,5 mm.

Außer den besagten Schichten 16 und dem Träger 19 umfasst das Filterband 3 in der ersten Ausführung auch magnetische Elemente - magnetische Körner 17 in Form von zylindrischen Neodym-Magneten, die in regelmäßigen Reihen und Spalten angeordnet sind (in der Fig. 3 sind diese Elemente im Querschnitt an beiden Enden des dargestellten Abschnitts des Filterbandes 3 sichtbar). Der Abstand zwischen benachbarten Reihen und benachbarten Spalten ist bei dieser Ausführung gleich - 8 mm. Es gibt vierzehn Reihen mit magnetischen Körnern 17 auf dem Filter, aber die dargestellte Zeichnung enthält der Einfachheit halber weniger davon. Zwischen den Reihen und Spalten werden dann quadratische Filterfenster vorgesehen, in denen sich zwei Schichten 16 aus Filtermaterial befinden, wobei jedes Fenster in den Ecken magnetische Körner 17 aufweist. Der magnetische Anteil des Bremsstaubs sammelt sich dann beim Filtern in diesen Ecken an, während sich in den nichtmagnetischen Fenstern diese magnetischen Ansammlungen nicht bilden, so dass die Filterschichten 16 dort weniger verstopft bleiben und somit länger effektiv filtern können. Die Größe der magnetischen Körner 17 ist in dieser Ausführung: 0,8 mm Höhe des zylindrischen Magneten und 3 mm sein Durchmesser.

An einem Ende des Filters ist der Filter mit der Spule verbunden. Bei dieser Ausführung ist das andere Ende frei und der Filter ist der Länge nach gefaltet, so dass der gefaltete Teil des Filters in einer Vorrichtung zum Auffangen von Bremsstaub (siehe unten bei der Ausführung dieser Vorrichtung) als Vorrat an sauberem Filter gelagert werden kann und der verstopfte Filter während des Betriebs schrittweise auf die Spule 10 aufgewickelt wird. Die magnetischen Körner 17 befinden sich über den größten Teil der Länge des Filters und über den größten Teil seiner Breite. Nur die Endabschnitte sind frei von Körnern, da die letzten 10 cm des Filters nicht effektiv für die Filtration genutzt werden können, wenn der Filter über den Luftauslass 2 in der Vorrichtung gespannt wird.

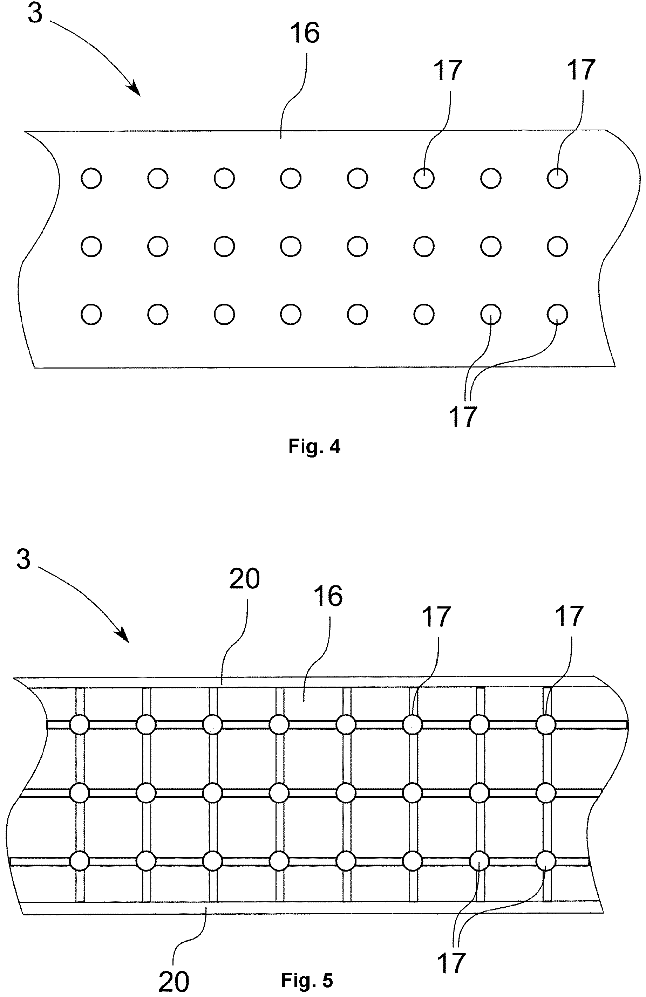

Die zweite beispielhafte Ausführung des Filters ist in der Fig. 4 dargestellt. Diese Ausführung weist ähnliche Grundmerkmale wie die erste Ausführung auf - sie umfasst eine Filterschicht 16, die mit magnetischen Elementen in Form von magnetischen Körnern 17 versehen ist. Bei den Körnern handelt es sich um zylindrische Magnete, die in regelmäßigen Reihen und Spalten angeordnet sind.

Der Abstand zwischen den Reihen und zwischen den Spalten beträgt 12 mm und die Magnete sind mit ihren Grundflächen direkt auf die Schicht 16 des Filtermaterials geklebt, die es bei dieser Ausführung nur eine gibt. Die verwendete Filter-Nanotextilie ist ausreichend fest, sodass weder der Träger 19 noch die Säume 20 benötigt werden. Die Abbildung zeigt nur einen Abschnitt des gesamten Filterbandes 3, das in dieser Ausführung die gleichen Abmessungen hat wie in der ersten Ausführung. Dieser Filter ist an beiden seinen Enden mit einer Spule versehen - eine Spule dient zum Aufwickeln des verstopften Filters, die andere zum Abwickeln des sauberen Filters. Vor der Verwendung befindet sich der größte Teil des Filters also auf der anderen Spule. In dieser Abbildung sind der Übersichtlichkeit halber nur drei Reihen magnetischer Elemente zu sehen, in der Ausführung gibt es jedoch mehr Reihen, nämlich zehn, mit einem Abstand von 6 mm zwischen der ersten und der letzten Reihe vom Rand des Filters. Die Größe der magnetischen Körner 17 ist in dieser Ausführung wie folgt: 1 mm Höhe des zylindrischen Magneten und 5 mm sein Durchmesser.

Die dritte beispielhafte Ausführung ist in der Fig. 5 dargestellt. Diese Ausführung unterscheidet sich von der zweiten Ausführung wie folgt: die Breite des Bandes beträgt 15 cm, seine Länge beträgt 300 cm. Die Schicht 16 aus Filtermaterial gibt es auch hier nur eine, aber das Filterband 3 umfasst einen Träger 19 aus gitterförmig angeordneten PTFE-Bändern und Säume 20 aus dem gleichen Material mit einer größeren Breite des PTFE-Bandes. Hier werden die Magnete an den sich kreuzenden Stellen auf dem Träger 19 geklebt, an denen sich (nicht abgebildete) erweiterte Flächen zum Anbringen der Magnete befinden.

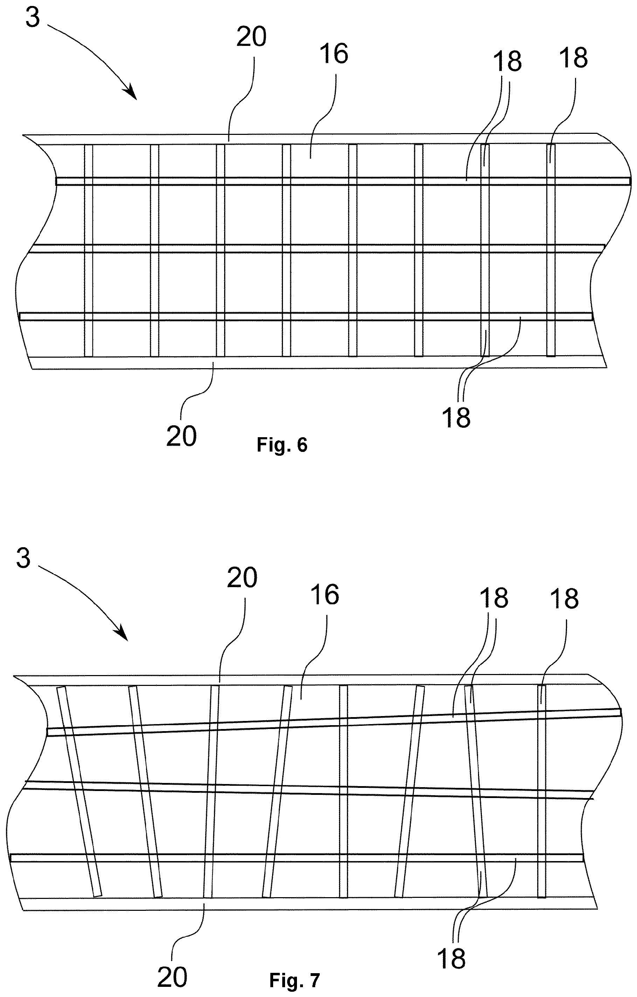

Die vierte Ausführung ist in der Fig. 6 dargestellt. Im Gegensatz zur dritten Ausführung werden in dieser Ausführung magnetische Elemente in Form von magnetischen Fasern 18 verwendet. Auch diese Ausführung umfasst einen Träger 19 mit Säumen 20, wie oben beschrieben. Die magnetischen Fasern 18 sind in der Längs- und Querrichtung auf dem magnetischen Band ausgerichtet. Die Fasern, die die Reihen definieren, liegen also in der Längsrichtung und parallel zueinander. Die Fasern, die die Spalten bilden, liegen in der Querrichtung und parallel zueinander und gleichzeitig senkrecht zu den Fasern in den Reihen. Zwischen den magnetischen Fasern 18, die hier eine Breite von 10 mm und eine Länge von 12 mm haben, werden dann Filterfenster vorgesehen. In dieser Ausführung werden die Fasern aus einem Polymer gesponnen, das magnetisches Pulver enthält. Die sonstigen Merkmale dieser Ausführung werden wie bei der dritten Ausführung umgesetzt. Hier sind nur die Säume 20 der Träger 19, wobei die Fasern direkt auf die Schicht 16 des Filtermaterials aufgeklebt oder angeschmolzen sind.

In einer alternativen Ausführung der vierten Ausführung wird der Träger 19 nicht verwendet - die magnetischen Fasern bieten eine ausreichende Festigkeit, so dass der Filter im Gebrauch auch ohne die Säume 20 und den Träger 19 ohne Beschädigungsrisiko gespannt werden kann.

Bei der fünften Ausführung sind die magnetischen Elemente wiederum magnetische Fasern 18, wie in der Fig. 7 dargestellt ist. Der Unterschied zur vierten Ausführung besteht darin, dass die Fasern nicht immer parallel/senkrecht zueinander verlaufen, sondern bis zu einem gewissen Grad eine zufällige Richtung haben. Die vorgesehenen Filterfenster haben daher die Form von verschiedenen Vierecken.

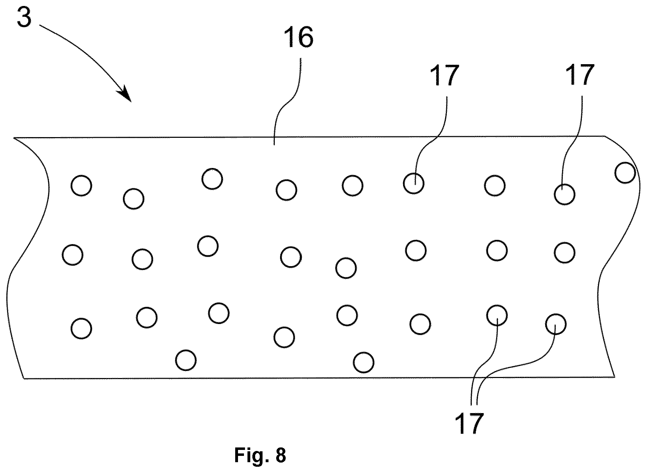

In der sechsten Ausführung, die in der Fig. 8 dargestellt ist, werden die meisten Merkmale wie in der zweiten Ausführung von der Fig. 4 ausgeführt. Allerdings ist die Anordnung der Magnete eher zufällig - sie sind nicht in geraden Reihen und Spalten angeordnet. Die Filterleistung des Filters wird durch eine solche Anordnung nicht beeinträchtigt, aber die Produktionskosten können niedriger sein.

In weiteren alternativen Ausführungen des Filters kann der Filter eine beliebige Anzahl von Filterschichten 16 umfassen. In einer der Ausführungen sind die Ausführungen in der Fig. 4 bis 8 so modifiziert, dass die magnetischen Elemente und ein etwaiger Träger 19 auf beiden Seiten von einer Schicht 16 aus Filtermaterial umgeben sind. Alternativ muss der Träger 19 nicht aus einem flexiblen Material wie Teflon bestehen, sondern er kann z. B. aus einem starren Polymer sein, das ein starres Gitter bildet. Dieser Träger 19 kann sich dann innerhalb des Filters und auf beiden Seiten des Filters befinden und die magnetischen Elemente können auf dem Träger 19 (z. B. durch Verkleben oder Anschmelzen) oder auf der Schicht 16 aus Filtermaterial befestigt werden. Anstelle von zylindrischen Magneten können auch beliebige andere magnetische Körner 17, z. B. mit unregelmäßiger Form, verwendet werden. Anstelle von magnetischen Fasern 18 können auch starre oder flexible Bänder aus magnetischem Material verwendet werden. Der Filter mit der Spule 10 zum Aufwickeln kann am gegenüberliegenden Ende mit einem Gehäuse oder einer Patrone versehen sein (Zufuhr des reinen Filters), in dem der gefaltete Filter untergebracht ist, um den Austausch des Filters zu erleichtern und um zu verhindern, dass er vor dem Einbau in die Vorrichtung zur Filtration verschmutzt wird, usw. Es ist auch möglich, den erfindungsgemäßen Filter ohne die Spule 10 zum Aufwickeln zu realisieren, z. B. kann er fest über dem Luftauslass 2 der Filtervorrichtung angebracht werden, ohne sich schrittweise zu bewegen, wie es bei der Spule 10 zum Aufwickeln der Fall ist (siehe siebte Ausführung unten).

Die Anzahl der Magnetelemente und deren Anordnung, die Abmessungen (Breite, Länge) des Filterbandes 3, die Dicke der Säume 20 usw. können in verschiedenen Ausführungen verändert werden. Der Träger 19 kann aus Bändern oder Fasern mit einer anderen Dicke als in den gezeigten Ausführungen gebildet werden - beispielsweise können die Fasern eine Dicke von 0,5 mm - 1 mm und eine Breite von 1 - 3 mm haben. In alternativen Ausführungen können die Säume 20 z. B. 2-5 mm breit und 0,5 mm - 1 mm dick sein.

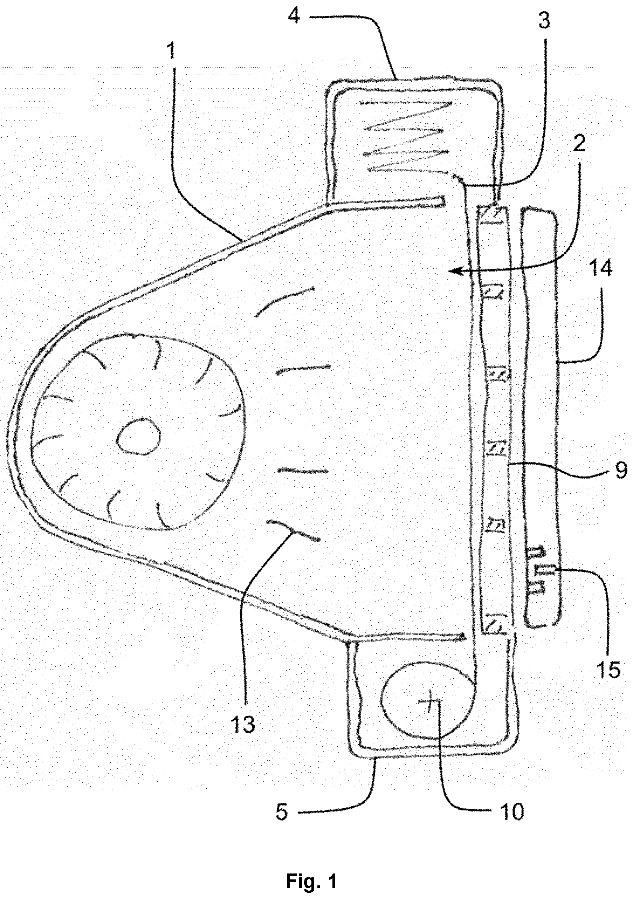

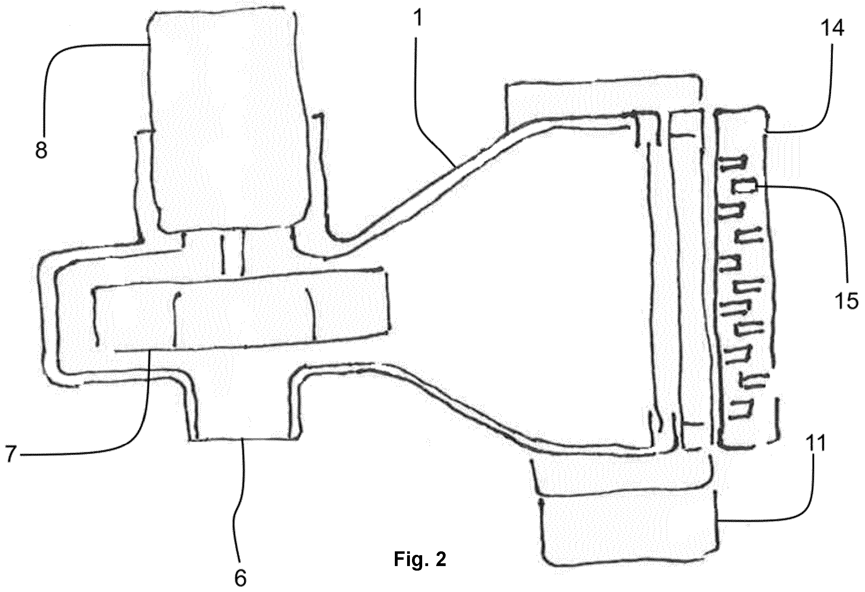

Die siebte Ausführung der Erfindung ist die Vorrichtung zum Auffangen von Bremsstaub für Kraftfahrzeuge, die eine Sammelkammer 1, die in der Fig. 1 und 2 dargestellt ist, wobei diese Sammelkammer 1 einen Lufteinlass 6, einen Luftauslass 2, eine Vorratskammer 4 und ein Filterband 3 umfasst, das vor dem Luftauslass 2 gespannt ist. Die Sammelkammer 1 ist in diesem Ausführungsbeispiel ein dünnwandiges Gussstück in Form eines Kegels mit einer aufgeweiteten Spitze, aus dessen Basis der Luftauslass 2 und aus der Seite der aufgeweiteten Spitze der Lufteinlass 6 austritt. Die Vorratskammer 4 umfasst einen Vorrat an sauberem Filterband 3, wobei das Filterband 3 die Vorratskammer 4 zum Luftauslass 2 und zur Spule 10 zum Aufwickeln verlässt. Das Filterband 3 umfasst in der siebten beispielhaften Ausführung ein Netz von Fasern, die die Partikel von 1 Mikron und größer auffangen. Das Filterband 3 ist hier wie im ersten Ausführungsbeispiel ausgeführt.

Die Sammelkammer 1 ist im siebten Ausführungsbeispiel zur Unterbringung im Fahrgestell des Fahrzeugs bestimmt, wobei ihr Lufteinlass 6 dann mit einer Luftentnahmestelle in der Nähe der Bremse verbunden ist. Diese Verbindung wird durch ein Rohr hergestellt. Die Luftentnahmestelle ist die Stelle in der Nähe einer Bremse, an der die durch die Reibung der Bremsmaterialien mit Staubpartikeln verschmutzte Luft angesaugt wird und von der diese Luft in die Sammelkammer 1 mit Filter geleitet wird. Die Luftansaugung von der Entnahmestelle zum Rohr, das mit dem Lufteinlass 6 der Sammelkammer 1 verbunden ist, erfolgt durch eine Luftpumpe. Das Ende des Rohrs an der Entnahmestelle ist so geformt, dass eine möglichst große Menge an verschmutzter Luft aufgefangen werden kann. Die Entnahmestelle hat daher die Form einer Kammer, die einen Teil der Bremse umgibt.

Im siebten Ausführungsbeispiel wird der Vorrat an sauberem Filterband 3 in Form eines gefalteten Bogens in der Vorratskammer 4 gelagert. In diesem Ausführungsbeispiel ist zur Gewährleistung einer kontinuierlichen Spannung des Filterbandes 3 ein flexibles Element am Austritt aus der Vorratskammer 4 angebracht, das das Filterband 3 gegen die Wand der Sammelkammer 1 drückt. Die Vorratskammer 4 umfasst in dieser Ausführungsform einen Deckel zum Einlegen eines Vorrats an sauberem Filterband 3. Beim Austausch des Filterbandes 3 muss nichts aus der Vorratskammer 4 entnommen werden, sondern lediglich ein neues Filterband 3 in Form eines gefalteten Bogens eingelegt werden, der an einem Ende an der Spule 10 zum Aufwickeln befestigt oder befestigbar ist.

Die Sammelkammer 1 umfasst im siebten Ausführungsbeispiel eine Wickelkammer 5 zur Aufnahme der Spule 10 zum Aufwickeln, die der Vorratskammer 4 gegenüberliegt und zwischen denen sich ein Luftauslass 2 befindet. So wird die Spule 10 zum Aufwickeln in der Wickelkammer 5 befestigt, wobei das verschmutzte Filterband 3 im Verlaufe der Zeit darauf aufgewickelt wird. Die Wickelkammer 5 umfasst einen Deckel zur Entnahme des verschmutzten Filterbandes 3 und zur Aufnahme einer neuen Spule 10 ohne das Filterband 3. Die Spule 10 zum Aufwickeln wird nach dem vollständigen Aufwickeln des verschmutzten Filterbandes 3 aus der Wickelkammer 5 entfernt und durch eine neue Spule 10 zum Aufwickeln ohne das Filterband 3 ersetzt. Die Spule in der Wickelkammer 5 ist mit einem Schrittmechanismus verbunden, der sie in Drehung versetzt, so dass das verschmutzte Filterband 3 am Luftauslass 2 durch ein sauberes Filterband 3 ersetzt werden kann.

Die Spule 10 zum Aufwickeln ist mit einem Antrieb 11 zum Drehen der Spule ausgestattet, bei dem es sich um einen elektrischen Schrittmotor handelt. Die Steuereinheit für diesen Antrieb ist der Steuercomputer des Fahrzeugs, der die Bewegung des Motors und damit den Filtervorschub nach einer voreingestellten Kilometerzahl sicherstellt.

Alternativ kann die Sammelkammer 1 anstelle des Deckels zwei abnehmbaren Teile umfassen, wobei nach deren Trennung der Zugang zur Wickelkammer 5 vom inneren Teil der Sammelkammer 1 aus möglich ist, um die Spule 10 zum Aufwickeln mit dem verschmutzten Filterband 3 zu entfernen und eine neue Spule 10 zum Aufwickeln einzusetzen.

Die Sammelkammer 1 umfasst im siebten Ausführungsbeispiel einen Ventilator 7 mit einem Elektromotor 8 zum Antrieb des Ventilators 7, der in der Fig. 2 dargestellt ist. Der Ventilator 7 ist nach dem Lufteinlass 6 der Sammelkammer 1 angeordnet und verstärkt den Zulauf der verschmutzten Luft in die Sammelkammer 1. Der Elektromotor 8 ist mit der Steuereinheit des Kraftfahrzeugs verbunden, und wenn die Bremse aktiviert wird, d. h. wenn der Hydraulikdruck im Bremssteuersystem ansteigt, beginnt der Elektromotor 8 zu laufen und damit auch die Rotation des Ventilators 7, wodurch die Ansaugung der verschmutzten Luft von den Bremsen des Kraftfahrzeugs in die Sammelkammer 1 erfolgt. In der gezeigten Ausführung ist der Ventilator 7 so konstruiert, dass er Luft axial ansaugt und diese in radialer Richtung zum Luftauslass 2 leitet.

In anderen Ausführungen ist es jedoch z. B. möglich, den Lufteinlass 6 gegen den Luftauslass 2 anzuordnen und den Ventilator 7 (Ventilatorschaufelrad) dazwischen zu haben, um die Luft in axialer Richtung des Ventilators 7 zu beschleunigen. In anderen Ausführungen kann die Sammelkammer 1 ohne den Ventilator 7 sein, wobei der Luftauslass 2 beispielsweise mit der Ansaugung des Motors verbunden ist, um einen Unterdruck zum Ansaugen der Luft von den Bremsen zu erzeugen, bzw. kann der Ventilator 7 an einer anderen Stelle als in der Sammelkammer 1 angeordnet sein.

Die Sammelkammer 1 umfasst ferner im siebten Ausführungsbeispiel zwischen dem Lufteinlass 6 und dem Luftauslass 2 vier Verteilungsrippen 13 zur Führung der Luft, um eine gleichmäßige Zufuhr der Luft zum Filterband 3 zu gewährleisten. Jede Verteilungsrippe 13 befindet sich nach dem Ventilator 7. Die Verteilungsrippen 13 sind längliche Platten aus dem gleichen Material wie die Sammelkammer 1 und sind unlösbar mit den Wänden der Sammelkammer 1 verbunden. Die unlösbare Verbindung wird im ersten Ausführungsbeispiel dadurch hergestellt, dass die Verteilungsrippen 13 ein Teil des Gussstücks sind.

Die Vorrichtung zum Auffangen von Bremsstaub umfasst einen Sekundärfilter 14 im siebten Ausführungsbeispiel, wobei dieser Sekundärfilter 14 Filterkanäle 15 für den Luftdurchlass und das Auffangen von Bremsstaub umfasst. Dieser Filter ist im siebten Ausführungsbeispiel aus Keramik und fängt Staubpartikel auf, die das Filterband 3 sowie das magnetische Gitter 9 passiert haben, was die Effizienz der Vorrichtung zum Auffangen von Bremsstaub weiter erhöht.

Im achten Ausführungsbeispiel ist das Filterband 3 an beiden seinen Enden an einer Spule befestigt, d. h. ein Ende in der Vorratskammer 4 an einer Abwickelspule mit einem sauberen Band und das andere Ende an einer Spule 10 zum Aufwickeln mit einem verstopften/verschmutzten Band, wodurch das Filterband 3 kontinuierlich über den Luftauslass 2 gespannt werden kann. Die Vorratskammer 4 umfasst einen Deckel zur Unterbringung und Entnahme des Vorrats an Filterband 3. Alternativ kann die Sammelkammer 1 aus zwei abnehmbaren Teilen bestehen, wobei es nach deren Trennung möglich ist, vom Inneren der Sammelkammer 1 aus auf die Vorratskammer 4 zuzugreifen, um die Abwickelspule zu entfernen oder eine neue Abwickelspule mit einem Vorrat an sauberem Filterband 3 einzusetzen. Eine Abwickelspule mit einem aufgespulten Vorrat an sauberem Filterband 3 wird in die Vorratskammer 4 eingesetzt, und wenn sie erschöpft ist, wird die Abwickelspule aus der Vorratskammer 4 entfernt und durch eine neue Abwickelspule mit einem aufgespulten Vorrat an sauberem Filterband 3 ersetzt. Die übrigen Teile dieses Ausführungsbeispiels sind analog zum siebten Ausführungsbeispiel gestaltet.

In einer alternativen Ausführung befindet sich die Spule 10 zum Aufwickeln des verschmutzten Filters im Inneren der Sammelkammer 1, unterhalb des Luftauslasses 2 untergebracht. Die Sammelkammer 1 umfasst in diesem Ausführungsbeispiel eine Öffnung mit Deckel zur Entnahme und Unterbringung der Spule 10 zum Aufwickeln des verschmutzten Filterbandes 3, die in der Wand der Sammelkammer 1 unterhalb des Luftauslasses 2 angeordnet ist. Die übrigen Teile dieses Ausführungsbeispiels sind analog zum siebten Ausführungsbeispiel gestaltet. In einer anderen Ausführungsform kann es beispielsweise zwei Verteilungsrippen 13 oder eine beliebige andere Anzahl von Rippen geben. Es ist auch möglich, die Sammelkammer 1 ohne diese Rippen zu gestalten.

Das neunte Beispiel der Erfindung ist ein Kraftfahrzeug, das eine Karosserie mit einem Fahrgestell, Rädern und Bremsen zum Abbremsen der Räder umfasst. Dieses Kraftfahrzeug umfasst ferner eine Vorrichtung zum Auffangen von Bremsstaub für Kraftfahrzeuge, wie sie z.B. oben in einer der Ausführungen, insbesondere in der dargestellten siebten Ausführung, beschrieben ist. Dieses Kraftfahrzeug enthält auch alle üblichen Teile von Personenkraftwagen wie Glasscheiben, Sitze, Motor, Beleuchtungsund Steuerungstechnik, Innenverkleidung usw.

Die Vorrichtung zum Auffangen von Staub für Personenkraftwagen umfasst in dieser Ausführungsform ferner eine Luftleitung, wobei die Luftleitung von jeder Bremse zum Lufteinlass 6 der Sammelkammer 1 führt. Die Luftleitung kann durch ein Rohr mit einer Luftpumpe realisiert werden, das die verschmutzte Luft mit Staubpartikeln von einer Entnahmestelle in der Nähe der Bremse durch den Lufteinlass 6 in die Sammelkammer fördert. Für alle Bremsen eines Fahrzeugs werden im neunten Ausführungsbeispiel eine Vorrichtung zum Auffangen von Bremsstaub und vier Rohre verwendet, die jeweils die verschmutzte Luft von einer Bremse des Fahrzeugs ableiten.

In einer anderen beispielhaften Ausführungsform kann im Fahrgestell für jede Bremse eine Vorrichtung zum Auffangen von Bremsstaub vorgesehen werden, so dass im Fahrgestell vier Vorrichtungen zum Auffangen von Bremsstaub für Fahrzeuge vorgesehen werden können. Die übrigen Teile dieser beispielhaften Ausführungsform sind analog zur ersten beispielhaften Ausführungsform gestaltet. In einer anderen Ausführungsform kann eine beliebige Anzahl von Vorrichtungen zum Auffangen von Bremsstaub für Kraftfahrzeuge im Fahrgestell untergebracht werden.

Die Vorrichtung zum Auffangen von Staub für Kraftfahrzeuge, die Gegenstand der vorliegenden Erfindung ist, kann in verschiedenen Ausführungsformen zum Beispiel für Straßenfahrzeuge verwendet werden, wie Personenkraftwagen, Motorräder, Lastwagen, Busse und Lieferwagen. Darüber hinaus können diese Vorrichtungen auch für Spezialfahrzeuge wie Bagger, Arbeitsmaschinen, Traktoren, Zugmaschinen und andere verwendet werden.

Die einzelnen Ausführungsbeispiele beschreiben hauptsächlich ihre unterschiedlichen Merkmale, d. h. beispielsweise Komponenten, ihre Funktionen und Eigenschaften, ohne jedoch andere Merkmale erschöpfend aufzulisten, die darin weiter enthalten sein können und in den anderen Ausführungsbeispielen erwähnt werden. Sofern nicht ausdrücklich ausgeschlossen oder nicht in einem logischen Widerspruch ist, können Merkmale aus anderen Ausführungsbeispielen in einem bestimmten Ausführungsbeispiel verwendet werden.

### Bezugszeichenliste

1 - Sammelkammer
2 - Luftauslass
3 - Filterband
4 - Vorratskammer
5 - Wickelkammer
6 - Lufteinlass
7 - Ventilator
8 - Elektromotor
9 - magnetisches Gitter
10 - Spule zum Aufwickeln
11 - Antrieb zum Drehen der Spule
13 - Verteilungsrippe
14 - Sekundärfilter
15 - Kanal für Luftdurchlass und Auffangen von Bremsstaub
16 - Schicht
17 - magnetisches Korn
18 - magnetische Faser
19 - Träger
20 - Saum

## Patentansprüche

1. Filter zum Auffangen von Bremsstaub umfassend mindestens eine Schicht (16) aus Filtermaterial und eine Vielzahl von magnetischen Elementen, die entlang dieser mindestens einen Schicht (16) aus Filtermaterial angeordnet sind, wobei die magnetischen Elemente entlang eines Großteils der Länge und Breite des Filters angeordnet sind, wobei nichtmagnetische Filterfenster mit einer Breite von mindestens 4 mm und einer Länge von mindestens 4 mm zwischen den magnetischen Elementen auf dem Filter vorgesehen sind, **dadurch gekennzeichnet, dass** der Filter die Form eines Filterbandes (3) hat, dessen Länge mindestens 5-mal größer ist als die Breite, wobei der Filter ferner eine Spule (10) zum Aufwickeln des Filters umfasst, wobei eines der Enden des Filters an der Spule (10) zum Aufwickeln befestigt ist.

2. Filter nach Anspruch 1, **dadurch gekennzeichnet, dass** die magnetischen Elemente in Reihen und Spalten angeordnet sind, wobei der Abstand zwischen benachbarten Reihen 6 mm bis 20 mm und der Abstand zwischen benachbarten Spalten 6 mm bis 20 mm beträgt.

3. Filter nach einem der Ansprüche 1 oder 2, **dadurch gekennzeichnet, dass** die magnetischen Elemente magnetische Bänder oder magnetische Fasern (18) sind, wobei die magnetischen Elemente, die die Reihen definieren, quer zu den magnetischen Elementen geführt werden, die die Spalten definieren.

4. Filter nach einem der Ansprüche 1 oder 2, **dadurch gekennzeichnet, dass** die magnetischen Elemente magnetische Körner (17) mit einer Breite von mindestens 2 mm, einer Länge von mindestens 2 mm und einer Höhe von mindestens 0,5 mm sind.

5. Filter nach Anspruch 3, **dadurch gekennzeichnet, dass** die magnetischen Körner (17) Neodym-Magnete in Form eines Zylinders sind.

6. Filter nach einem der Ansprüche 4 oder 5, **dadurch gekennzeichnet, dass** es im Durchschnitt 10 bis 300 von magnetischen Körnern (17) pro Quadratdezimeter des Filters gibt.

7. Filter nach einem der vorhergehenden Ansprüche, **dadurch gekennzeichnet, dass** er ferner einen Träger (19) umfasst, an dem das Filtermaterial befestigt ist, wobei die magnetischen Elemente an dem Träger (19) befestigt sind.

8. Vorrichtung zum Auffangen von Bremsstaub für Kraftfahrzeuge umfassend eine Sammelkammer (1), wobei die Sammelkammer (1) mindestens einen Lufteinlass (6) und mindestens einen Luftauslass (2) aufweist, **dadurch gekennzeichnet, dass** die Vorrichtung ferner einen Filter nach einem der vorhergehenden Ansprüche umfasst, der vor dem Luftauslass (2) gespannt ist, und die Sammelkammer (1) ferner mindestens eine Vorratskammer (4) zum Aufbewahren des sauberen Teils des Filters umfasst, wobei die Spule (10) zum Aufwickeln mit einem Ende des Filters in der Sammelkammer (1) angeordnet ist und das andere Ende des Filters in der Vorratskammer (4) angeordnet ist.

9. Vorrichtung zum Auffangen von Bremsstaub nach Anspruch 8, **dadurch gekennzeichnet, dass** die Spule (10) zum Aufwickeln mit einem Antrieb (11) zum Drehen der Spule (10) versehen ist.

10. Vorrichtung zum Auffangen von Bremsstaub nach einem der Ansprüche 8 oder 9, **dadurch gekennzeichnet, dass** die Sammelkammer (1) einen Ventilator (7) mit einem Elektromotor (8) zum Antrieb des Ventilators (7) umfasst.

11. Vorrichtung zum Auffangen von Bremsstaub nach einem der Ansprüche 8 bis 10, **dadurch gekennzeichnet, dass** die Sammelkammer (1) eine Wickelkammer (5) umfasst, in der die Spule (10) zum Aufwickeln angeordnet ist.

## Claims

1. Filter for capturing brake dust, comprising at least one layer (16) of filter material and a plurality of magnetic elements arranged along said at least one layer (16) of filter material, wherein the magnetic elements are arranged along a majority of the length and width of the filter, wherein non-magnetic filter windows having a width of at least 4 mm and a length of at least 4 mm are provided between the magnetic elements on the filter, **characterized in that** the filter is in the form of a filter tape (3) whose length is at least 5 times greater than the width, wherein the filter further comprises a spool (10) for winding the filter, wherein one of the ends of the filter is attached to the spool (10) for winding.

2. Filter according to claim 1, **characterized in that** the magnetic elements are arranged in rows and columns, wherein the distance between adjacent rows is 6 mm to 20 mm and the distance between adjacent columns is 6 mm to 20 mm.

3. Filter according to any one of claims 1 or 2, **characterized in that** the magnetic elements are magnetic tapes or magnetic fibers (18), wherein the magnetic elements defining the rows are guided transversely to the magnetic elements defining the columns.

4. Filter according to any one of claims 1 or 2, **characterized in that** the magnetic elements are magnetic grains (17) with a width of at least 2 mm, a length of at least 2 mm and a height of at least 0.5 mm.

5. Filter according to claim 3, **characterized in that** the magnetic grains (17) are neodymium magnets in the form of a cylinder.

6. Filter according to any one of claims 4 or 5, **characterized in that** there are on average 10 to 300 magnetic grains (17) per square decimeter of the filter.

7. Filter according to any one of the preceding claims, **characterized in that** it further comprises a support (19) to which the filter material is attached, wherein the magnetic elements are attached to the support (19).

8. Device for capturing brake dust for motor vehicles comprising a collection chamber (1), wherein the collection chamber (1) has at least one air inlet (6) and at least one air outlet (2), **characterized in that** the device further comprises a filter according to any one of the preceding claims, which is stretched in front of the air outlet (2), and the collection chamber (1) further comprises at least one storage chamber (4) for storing the clean part of the filter, wherein the spool (10) for winding is arranged with one end of the filter in the collection chamber (1) and the other end of the filter is arranged in the storage chamber (4).

9. Device for capturing brake dust according to claim 8, **characterized in that** the spool (10) for winding is provided with a drive (11) for rotating the spool (10).

10. Device for capturing brake dust according to any one of claims 8 or 9, **characterized in that** the collection chamber (1) comprises a fan (7) with an electric motor (8) for driving the fan (7).

11. Device for capturing brake dust according to any one of claims 8 to 10, **characterized in that** the collection chamber (1) comprises a winding chamber (5) in which the spool (10) for winding is arranged.

## Revendications

1. Filtre de captation de poudre de freinage comprenant au moins une couche (16) en matériau filtrant et une pluralité d'éléments magnétiques qui sont agencés le long de cette au moins une couche (16) en matériau filtrant, dans lequel les éléments magnétiques sont agencés le long d'une grande partie de la longueur et de la largeur du filtre, dans lequel des fenêtres de filtre non magnétiques sont prévues avec une largeur d'au moins 4 mm et une longueur d'au moins 4 mm entre les éléments magnétiques sur le filtre, **caractérisé en ce que** le filtre présente la forme d'une bande de filtre (3), dont la longueur est supérieure d'au moins 5 fois à la largeur, dans lequel le filtre comprend de plus une bobine (10) pour enrouler le filtre, dans lequel l'une des extrémités du filtre est fixée à la bobine (10) pour l'enroulement.

2. Filtre selon la revendication 1, **caractérisé en ce que** les éléments magnétiques sont agencés en rangées et colonnes, dans lequel la distance entre des rangées contiguës est comprise entre 6 mm et 20 mm et la distance entre des colonnes contiguës est comprise entre 6 mm et 20 mm.

3. Filtre selon l'une quelconque des revendications 1 ou 2, **caractérisé en** ceque les éléments magnétiques sont des bandes magnétiques ou fibres magnétiques (18), dans lequel les éléments magnétiques qui définissent les rangées, sont guidés transversalement aux éléments magnétiques qui définissent les colonnes.

4. Filtre selon l'une quelconque des revendications 1 ou 2, **caractérisé en** ceque les éléments magnétiques sont des grains magnétiques (17) avec une largeur d'au moins 2 mm, une longueur d'au moins 2 mm et une hauteur d'au moins 0,5 mm.

5. Filtre selon la revendication 3, **caractérisé en ce**que les grains magnétiques (17) sont des aimants en néodyme en forme de cylindre.

6. Filtre selon l'une quelconque des revendications 4 ou 5, **caractérisé en ce**qu'il y a en moyenne 10 à 300 grains magnétiques (17) par décimètre carré du filtre.

7. Filtre selon l'une quelconque des revendications précédentes, **caractérisé en ce**qu'il comprend de plus un support (19) auquel le matériau de filtre est fixé, dans lequel les éléments magnétiques sont fixés au support (19).

8. Dispositif de captation de poudre de freinage pour des véhicules automobiles comprenant une chambre de collecte (1), dans lequel la chambre de collecte (1) présente au moins une entrée d'air (6) et au moins une sortie d'air (2), **caractérisé en** ceque le dispositif comprend de plus un filtre selon l'une quelconque des revendications précédentes qui est tendu avant la sortie d'air (2), et la chambre de collecte (1) comprend de plus au moins une chambre de stockage (4) pour le stockage de la partie propre du filtre, dans lequel la bobine (10) pour l'enroulement est agencée avec une extrémité du filtre dans la chambre de collecte (1) et l'autre extrémité du filtre est agencée dans la chambre de stockage (4).

9. Dispositif de captation de poudre de freinage selon la revendication 8, **caractérisé en ce**que la bobine (10) pour l'enroulement est pourvue d'un entraînement (11) pour la rotation de la bobine (10).

10. Dispositif de captation de poudre de freinage selon l'une quelconque des revendications 8 ou 9, **caractérisé en** ceque la chambre de collecte (1) comprend un ventilateur (7) avec un moteur électrique (8) pour l'entraînement du ventilateur (7).

11. Dispositif de captation de poudre de freinage selon l'une quelconque des revendications 8 à 10, **caractérisé en ce que** la chambre de collecte (1) comprend une chambre d'enroulement (5), dans laquelle la bobine (10) pour l'enroulement est agencée.
